(19) Europäisches Patentamt
European Patent Office
Office européen des brevets

(11) **EP 1 126 293 A2**

(12) **EUROPEAN PATENT APPLICATION**

(43) Date of publication:
**22.08.2001 Bulletin 2001/34**

(51) Int Cl.[7]: **G02B 6/293**

(21) Application number: **00310572.3**

(22) Date of filing: **29.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.12.1999 US 452877**
**08.05.2000 US 566392**

(71) Applicant: **JDS Uniphase Inc.**
**Nepean, Ontario K2G 5W8 (CA)**

(72) Inventors:
• **Xiaoli, Fu**
**nepean, Ontario K2G 5W8 (CA)**
• **Jimin, Xie**
**Aylmer, Quebec J9J 2P1 (CA)**

(74) Representative: **McKechnie, Neil Henry et al**
**Kennedys Patent Agency Limited**
**Floor 4, Queens House**
**29 St Vincent Place**
**Glasgow G1 2DT (GB)**

(54) **Multiplexing/demultiplexing optical circuit**

(57) A circuit for de-interleaving or interleaving multichannel optical signals having a predetermined inter-channel frequency spacing, uses a plurality of sequentially coupled periodic filters of a similar free spectral range, for example Fabry-Perot etalon-based interleavers/de-interleavers. The spectral response of the consecutive filters is shifted to accommodate different channel groupings. The free-spectral range of each of the interleavers is similar and the channel period is larger than two adjacent inter-channel frequency spacings of an input optical signal.

Fig. 4a

## Description

## Field of the Invention

This invention relates to a multiplexor/demultiplexor for multiplexing and demultiplexing optical signals. More particularly, the invention relates to a method and system for filtering or separating closely spaced signal channels that would otherwise not be suitably filtered by conventional optical filters.

## Background of the Invention

Using optical signals as a means of carrying channeled information at high speeds through an optical path such as an optical waveguide i.e. optical fibres, is preferable over other schemes such as those using microwave links, coaxial cables, and twisted copper wires, since in the former, propagation loss is lower. Optical systems are immune to Electro-Magnetic Interference (EMI), and have higher channel capacities. High-speed optical systems have signaling rates of several mega-bits per second to several tens of giga-bits per second.

Optical communication systems are nearly ubiquitous in communication networks. The expression herein "Optical communication system" relates to any system that uses optical signals at any wavelength to convey information between two points through any optical path. Optical communication systems are described for example, in Gower, Ed. Optical communication Systems, (Prentice Hall, NY) 1993, and by P.E. Green, Jr. in "Fiber optic networks" (Prentice Hall New Jersey) 1993, which are incorporated herein by reference.

As communication capacity is further increased to transmit an ever-increasing amount of information on optical fibres, data transmission rates increase and available bandwidth becomes a scarce resource.

High speed data signals are plural signals that are formed by the aggregation (or multiplexing) of several data streams to share a transmission medium for transmitting data to a distant location. Wavelength Division Multiplexing (WDM) is commonly used in optical communications systems as means to more efficiently use available resources. In WDM each high-speed data channel transmits its information at a pre-allocated wavelength on a single optical waveguide. At a receiver end, channels of different wavelengths are generally separated by narrow band filters and then detected or used for further processing. In practice, the number of channels that can be carried by a single optical waveguide in a WDM system is limited by crosstalk, narrow operating bandwidth of optical amplifiers and/or optical fiber nonlinearities. Moreover such systems require an accurate band selection, stable tunable lasers or filters, and spectral purity that increase the cost of WDM systems and add to their complexity.

Currently, internationally agreed upon channel spacing for high-speed optical transmission systems, is 100 GHz, equivalent to 0.8 nm, surpassing, for example 200 GHz channel spacing equivalent to 1.6 nanometers between adjacent channels. Of course, as the separation in wavelength between adjacent channels decreases, the requirement for more precise demultiplexing circuitry capable of ultra-narrow-band filtering, absent crosstalk, increases. The use of conventional dichroic filters to separate channels spaced by 0.4 nm or less without crosstalk, is not practicable; such filters being difficult if not impossible to manufacture.

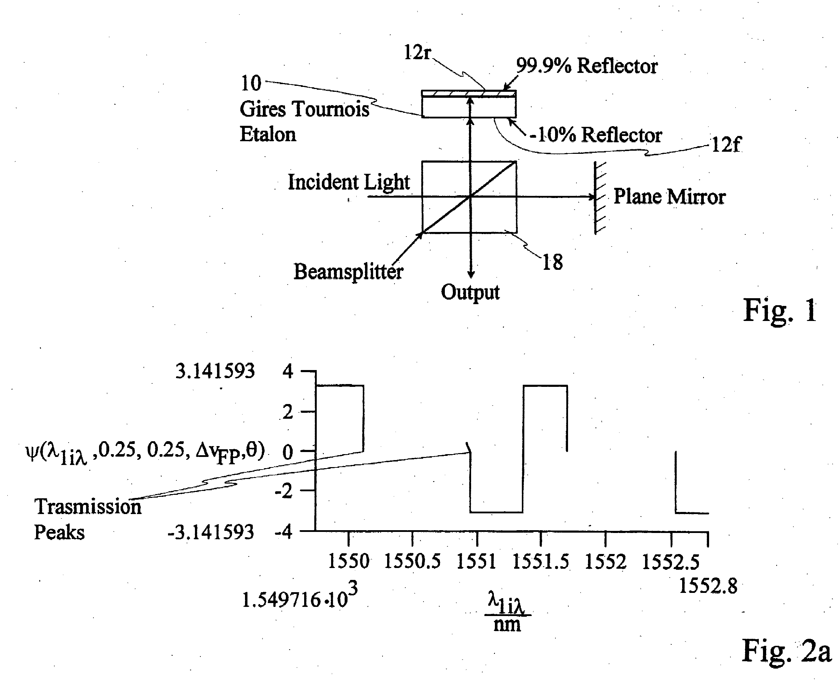

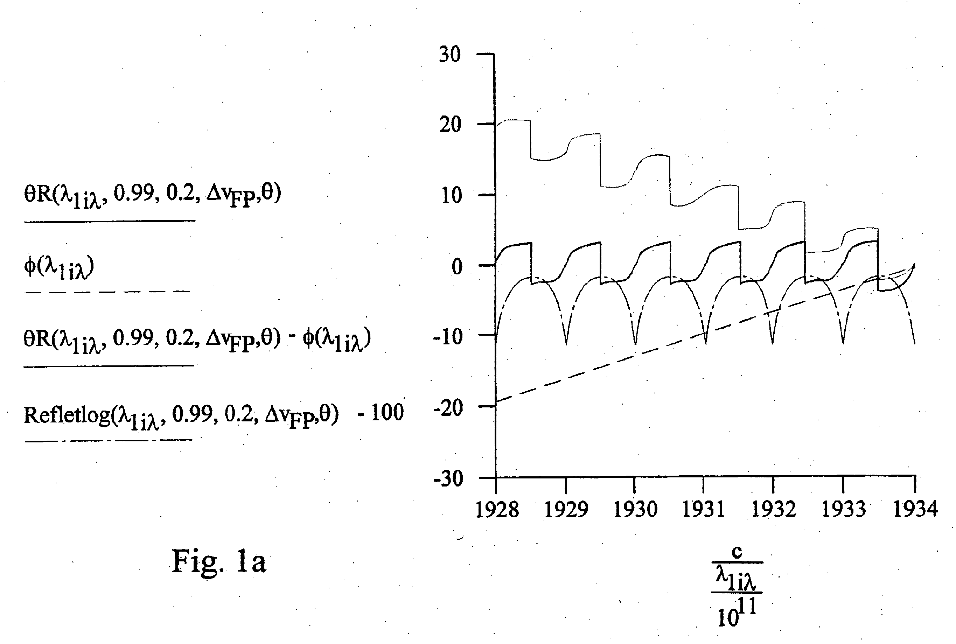

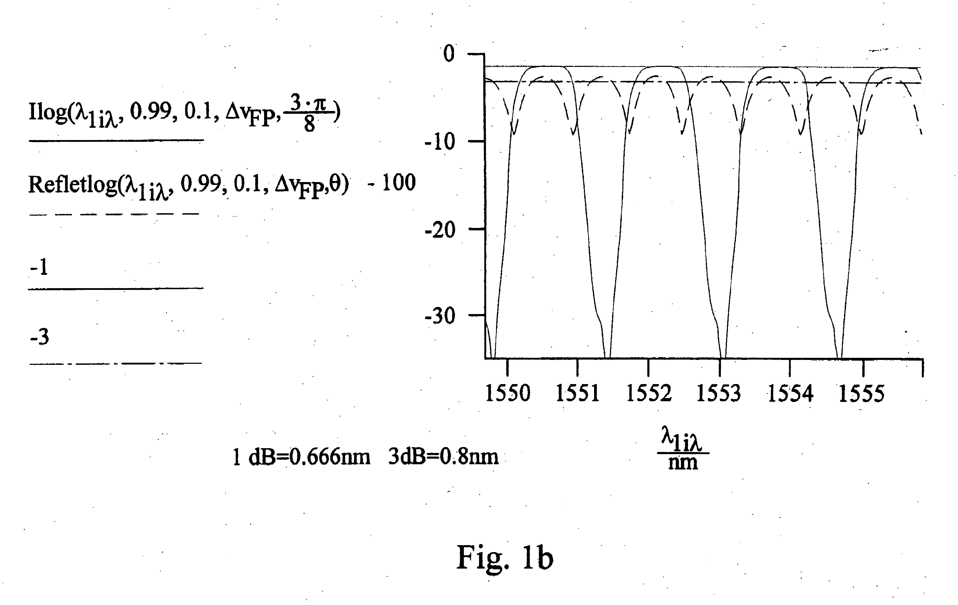

In a paper entitled Multifunction optical filter with a Michelson-Gires-Turnois interferometer for wavelength-division-multiplexed network system applications, by Benjamin B. Dingle and Masayuki Izutsu published 1998, by the Optical Society of America, a device hereafter termed the GT device provides some of the functionality provided by the instant invention. For example, the GT device as exemplified in Fig. 1 serves as a narrow band wavelength demultiplexor; this device relies on interfering a reflected E-field with an E-field reflected by a plane mirror 16. The etalon 10 used has a 99.9% reflective back reflector 12r and a front reflector 12f having a reflectivity of about 10%; hence an output signal from only the front reflector 12f is utilized. A beam splitting prism (BSP) 18 is disposed to receive an incident beam and to direct the incident beam to the etalon 10. The BSP 18 further receives light returning from the etalon and provides a portion of that light to the plane mirror 16 and a remaining portion to an output port. Although this known GT device appears to perform its intended function, it appears to have certain limitations: As opposed to the, device of the instant invention which has a phase difference between transmitted and reflected E-fields of 0 and $\pi$ radians, the GT as can be seen in the graph of Fig. 1b has some variation in phase between 0 and $\pi$ radians. Furthermore, in the GT device a finite optical path difference is required in the interferometer to produce an output response that mimics the one provided by the device of the instant invention. Typically for a 50GHz free spectral range (FSR) this optical path difference would be a few millimeters; in contrast in the instant invention the optical phase difference need only be approximately $\lambda/4$ resulting in a more temperature stable and insensitive system. One further limitation of the GT device is its apparent requirement in the stabilization of both the etalon and the interferometer. Yet a further drawback to the GT device is the requirement for an optical circulator to extract the output signal adding to signals loss and increased cost of the device; and the requirement of a BSP which is known to have a significant polarization dependent loss. Fig. 1a shows a graph with a linear plot of the phase difference between the two reflected E-fields from the GT and a mirror with an optical path difference. Further, the graph shows a linear plot of phase variation of reflected light from the GT. A reflection profile is also shown in a logarithmic plot, and a straight sloped dotted line is a linear plot of a GT with a finite optical path difference.

It is an object of this invention to provide a method and circuit for separating an optical signal having closely spaced channels into at least two optical signals wherein channel spacing between adjacent channels is greater in each of the at least two optical signals, thereby requiring less precise filters to demultiplex channels carried by each of the at least two signals.

It is an object of this invention to provide a relatively inexpensive optical circuit for interleaving or de-interleaving optical channels.

It is an object of this invention to provide an etalon based device wherein output signals from two oppositely disposed ports can be controllably interferometrically combined to yield a desired output response.

It is an object of this invention to provide a deinterleaver/interleaver circuit that utilize a plurality of periodic devices having a substantially similar free-spectral range (FSR).

**Summary of the Invention**

In accordance with one aspect of the invention, there is provided an interleaver/de-interleaver optical circuit for interleaving or deinterleaving an input optical signal having a plurality of channels of predetermined inter-channel frequency spacing, comprising a plurality of sub- interleaver/de-interleavers, each sub-interleaver/de-interleaver being optically coupled to at least one other sub- interleaver/de-interleaver for providing an output signal thereto, or for receiving an output signal therefrom, each of the sub-interleaver/de-interleavers having a substantially same free-spectral range and a shifted spectral response relative to the other sub-interleavers/de-interleavers, each of the sub- interleaver/de-interleavers for interleaving or de-interleaving a substantially different group of periodic channels having different centre wavelengths.

In accordance with the present invention, there is further provided a method of de-interleaving a multi-channel optical signal, comprising the steps of:

passing an input signal having a plurality of channels of a predetermined spacing through a plurality of sequentially coupled periodic de-interleaving filters having each a substantially same period, and wherein peak centre passbands of the filters are offset from one another, the filters being arranged such that one of the filters is optically coupled to receive or provide a signal to another of the filters, and wherein the period of the filters is greater than two adjacent inter-channel frequency spacings of said input signal.

In accordance with a further aspect of the invention, there is provided a method of de-interleaving an optical signal comprising the steps of:

providing three periodic filters having a substantially same FSR and different centre peak wavelengths.

passing the optical signal into a first of the three filters having an input port and two output ports; providing a partially de-interleaved signal from the two output ports to input ports of two other of the three filters; and, allowing signals to propagate from output ports of the two other filters.

An aspect of this invention provides a system is provided for de-interleaving a multi-channel optical signal, comprising:

a plurality filters having a periodic output response each having a period T, wherein peak centre passbands of the filters are offset from one another by a predetermined amount, the filters being arranged such that each of the filters is optically coupled to receive or provide a signal to another of the filters, the filters having a substantially symmetric output response.

Advantageously, interleavers with $n\Delta T$ $(n>2)$ output channel spacing can be used to interleave channels separated by a spacing of $\Delta T$. This device is less bulky than using a serial approach of feeding the output of a first de-interleaving stage to two subsequent stages and feeding the outputs of the second two stages to four further de-interleaving stages and so on. In the prior art approach, each next stage has twice the free spectral range (FSR) than the previous stage (i.e. when starting with input signal channel spacing of 50 GHz, the first interleaver spacing would be 100 GHz, the next spacing would be 200 GHz, then 400 GHz etc.).

Another advantage is that plural similar devices can be used for all interleaving stages.

Another advantage is that the de-interleaved channels' pass band can be very wide.

Another advantage is that the system in accordance with an embodiment of the invention can be used to de-interleave irregular spaced channels which may be employed to suppress four wave mixing in a WDM transmission system when the adjacent channel spacing is less than 100 GHz.

When a optical filter is perfected through research and development, it is preferred to use the filter for numerous applications without having to design a new filter "building-block" for each different application. This invention allows a same etalon based device to be used repeatedly by interconnecting these same etalons and angle tuning them to provide different output responses from each etalon based interleaver. This has significant cost and reliability advantages. Furthermore stocking different etalons with significantly different free-spectral ranges is not required.

**Brief Description of the Drawings**

Exemplary embodiments of the invention will now be described in conjunction with the drawings in which:

Fig. 1 is a circuit block diagram of a prior art Michelson-Gires-Tournois interferometer;

Fig. 1a is logarithmic graph plotting phase versus wavelength for a two output Michelson-Gires-Tournois interferometer;

Fig. 1b is a graph of a simulated output response of a Michelson-Gires-Tournois interferometer;

Fig. 2 is a circuit block diagram of a single etalon interferometric structure;

Fig. 2a is a graph plotting phase versus wavelength for a two output etalon;

Fig. 3 is a more detailed diagram of the etalon shown in Fig. 2;

Fig. 4a is a circuit block diagram of an alternative embodiment of the structure shown in Fig. 2, wherein two light transmissive blocks are utilized as combining regions;

Fig. 4b is a circuit block diagram similar to the one shown in Fig. 4a, wherein the circuit is operated in a reverse mode of operation;

Fig. 4c is a similar circuit block diagram to Figs 4a and 4b, wherein a fourth port is added;

Fig. 5 is a detailed block diagram depicting a preferred embodiment similar to the one shown in Figs 4a to 4c;

Fig. 6a is a graph of an output response of phase versus wavelength for a multi-cavity etalon shown in Fig. 6c;

Fig. 6b is a graph depicting the output response of a single cavity etalon and of a multiple cavity etalon;

Fig. 6c is a circuit diagram of an alternative embodiment wherein a multi-cavity etalon is used;

Fig. 7 is a graph depicting a linearized intensity output response of an alternative embodiment;

Fig. 8 is a graph depicting a an output response of an alternative embodiment where the reflectivities and phase are selected such that a band pass filter is provided;

Fig. 9 is a circuit diagram of an alternative embodiment wherein planar waveguide technology is utilized;

Fig. 10 is a more detailed schematic diagram of an MMI coupler used in the circuit of Fig. 9 wherein the operation is of the coupler is described in accordance with this figure;

Fig. 11 is a circuit diagram of an alternative embodiment to that shown in Fig. 9, wherein two etalons are created by providing regions within the planar waveguide having a different refractive index than in an adjacent region;

Fig. 12 is a block circuit diagram of ring resonator used and is a functional equivalent to the Fabry-Perôt resonator shown in previous embodiments;

Fig. 13 is a block circuit diagram of yet an alternative embodiment wherein ring resonator is utilized;

Figs. 14 is a graph of transmission versus relative wavelength showing spectral amplitude response of the two outputs $a_r$ and $a_t$ of the ring resonator, and Fig. 15 is a graph of the spectral phase response of the two outputs of the ring resonator respectively;

Fig. 16 is a graph of phase difference versus relative wavelength between the two outputs $a_r$ and $a_t$ of the ring resonator showing the phase difference alternating between $-\pi/2$ and $+\pi/2$ over consecutive wavelength channels equivalent fo the FSR of the ring resonator;

Fig. 17 is a graph of transmission versus relative wavelength depicting the spectral transmissions of the two interleaved signals $a_{out1}$ and $a_{out2}$ at respective outputs of the coupler interferometer;

Fig. 18 is a circuit diagram of the basic circuit shown in Fig. 11 wherein a region of the waveguide between the first coupler and the third coupler is doped to become more light sensitive to effect a controlled refractive index change by being irradiated by a light source;

Fig. 19 is a circuit diagram of a circuit shown for providing a de-interleaver/interleaver function;

Fig. 20a is a circuit diagram of a portion of the circuit shown in Fig. 19;

Figs. 20b and 20c are circuit diagrams of portion of the circuit shown in Fig. 19;

Fig. 21 is a schematic representation of the spectral response (transmission/reflection) of an interleaver of the invention illustrating the difference between the passband and the stopband,

Fig. 22 is a schematic representation of the circuit of the invention with four de-interleavers,

Fig. 23 is a schematic view of a Fabry-Perôt etalon-based interleaver with tuning means,

Fig. 24 is a schematic view of a prior art interleaving/de-interleaving circuit..

Fig. 25 is a schematic view of a 200 GHz interleaver/deinterleaver circuit;

Fig. 26 is a schematic view of an interleaver in accordance with an embodiment of the invention wherein three symmetric interleavers are optically coupled to provide de-interleaving of an input stream of 50 GHz spaced channels into four streams of 200 GHz spaced channels;

Fig. 27 is a schematic view of an interleaver in accordance with an alternative embodiment of the invention wherein the output can be symmetrical or asymmetrical and wherein bandwidth can be adjusted; and,

Fig. 28 is a schematic view an embodiment of the interleaver shown in Fig. 27 wherein an asymmetric output is provided.

## Detailed Description

The basic interleaver circuit shown and described here after is described in commonly assigned co-pending U.S. Patent application serial numbers 09/275,962 filed March 25, 1999, 09/338,925 filed June 23 1999, 09/358,445 filed July 22/99 and Canadian patent application serial number 2,256,963 filed December 23, 1998.

In general, the spectral characteristics of an etalon filter are determined by the reflectivity and gap spacing of the mirrors or reflective surfaces. The Fabry-Perôt principle allows a wideband optical beam to be filtered whereby only periodic spectral passbands are substantially transmitted out of the filter. Conversely, if the reflectivity of the mirrors or reflective surfaces are selected appropriately, periodic spectral passbands shifted by **d** nanometers are substantially reflected backwards from the input mirror surface. In adjustable Fabry-Perôt devices, such as one disclosed in United States Patent number 5,283,845 in the name of Ip, assigned to JDS Fitel Inc, tuning of the center wavelength of the spectral passband is achieved typically by varying the effective cavity length (spacing).

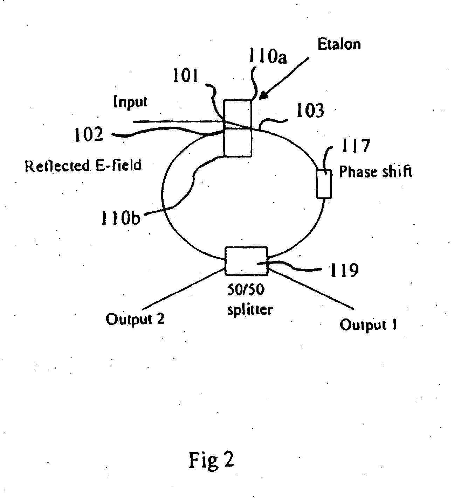

Referring now to Fig. 2, an optical circuit is shown for demultiplexing a channeled optical signal, that is, a signal comprising multiplexed closely spaced channels, into a plurality of less-dense channeled signals each comprising a plurality of multiplexed less closely spaced channels. Operating the circuit in a first direction wherein the circuit performs a multiplexing function on a plurality of channels launched into an end of the circuit, it is an interleaver circuit, and in an opposite direction wherein the circuit performs a demultiplexing function on a composite signal launched therein at an opposite end to provide a plurality of demultiplexed channels it serves as a de-interleaver circuit. However, the term interleaver circuit shall be used hereafter to denote this interleaver/de-interleaver circuit. One such interleaver circuit is disclosed as a comb splitting. filter in U.S. Patent No. 5,680,490 in the name of Cohen.

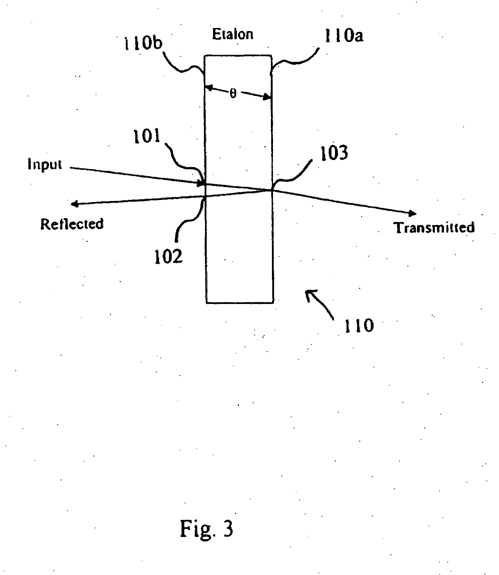

Referring now to Figs. 2, an optical interleaver circuit is shown including a 3-port optical cavity in the form of a Fabry-Perôt etalon filter 110 (shown in more detail in Fig. 3) having a first partially reflective end face 110a and a second partially reflective end face 110b. The Fabry-Perôt etalon has an input port 101 at end face 110b, a second port 102 at the Fabry-Perôt etalon filter reflection end face 110, and a third port 103 coupled to a transmission end face 110a serving as an output port. The Fabry-Perôt etalon filter 110 has two partially reflective mirrors, or surfaces, facing each other and separated by a certain fixed gap which forms a cavity.

A phase shifter for controllably delaying an optical signal passing therethrough is optically coupled with the third port 103 at an end of the Fabry-Perôt etalon 110. A 50/50 splitter 119 is disposed between and optically coupled with an output end of the phase shifter 117 and the second port 102 of the Fabry-Perôt etalon 110. Although shown schematically as having waveguides, for example, optical fibres for directing signals from the etalon to the phase shifter 117 and splitter 119, less preferable free space implementations using mirrors or reflectors are within the capability of one skilled in the art. Of course coupling lenses (not shown) such as GRIN lenses are preferred for coupling light from and or to optical fibres from particular components.

It was recently noticed that a phase difference between the reflected and transmitted E-field phase from an etalon, for example, the etalon 110, remains constant under certain circumstances. Furthermore, when input light is launched into the input port 101 of the etalon, the phase difference between a resulting signal exiting the end face 103 and a resulting signal exiting the end face 102 is either 0 or $\pi$ radians, and changes on every spectral transmission resonance. This is illustrated in Fig. 2a, where phase is plotted versus wavelength. The locking of the phase difference between transmitted and reflected E-fields occurs due to multiple interference effects within the etalon.

An embodiment of this invention utilizes this feature by interfering the two resulting signals, by way of example, so that a flat spectral passband filter can be realized. By adjusting the phase relationship between the two signals exiting opposing faces of the Fabry-Perôt etalon 110, and subsequently interfering these signals, various desired output responses can be realized. Of course, optionally, additional control can be added to either attenuate or amplify one of or both of the two signals. Since the path length difference between the optical fibres between port 2 of the etalon 110 and the 50/50 splitter 119 and between port 3 of the etalon 110 and the 50/50 splitter will likely be other than zero or some exact multiple of the free spectral range of the etalon, provision of the phase shifter 117 ensures a means of adjusting for unwanted or desired phase differences due to path length differences.

If no inherent phase difference is created between the two arms of the interferometer, that is, between the paths between the etalon 110 and the splitter 119, the following outputs will be obtained.

Output from port 3: $E_R e^{j\theta R} + E_T ej(\theta T - \pi/2)$

Output from port 2: $E_T e^{j\theta T} + E_R e^{j(\theta R - \pi/2)}$

Where $\theta R$ and $\theta T$ are the reflected and transmitted phases created by the etalon. The interferometric output will be given by the general expression:

$$I_{Res} = 1/2 \ (E_R{}^2 + E_T{}^2 + 2E_R E_T \cos(\Delta\theta))$$

Where $\Delta\theta$ represents the phase difference between the two E-fields. If $\theta R = \theta T$ then the phase difference for both outputs will be $\pi/2$. Also if $\theta R - \theta T = \pi$ then again the phase difference for both the outputs would be $\pi/2$. Thus, the interferometric action that is desired does not exist.

However, if a $\pi/2$ phase difference is provided in the interferometric arms then the two outputs would be given by:

Output from port 3: $E_R e^{j\theta R} + E_T e^{j(\theta T)}$

Output from port 2: $E_T e^{j(\theta T + \pi/2)} + E_R e^{j(\theta R - \pi/2)}$

As can be seen from above, the outputs from the interferometer now have a $\pi$ phase shift, which indicates that useful or a desired interferometric action between the two signals can exist. The phase difference for the output at port 3 and the output at port 2 would be $\theta R - \theta T$ and $\theta R - \theta T - \pi$ respectively. If $\theta R = \theta T$ then the phase difference for output the output at port 3 and 2 would be 0 and $\pi$ respectively. For $\theta R - \theta T = \pi$ then output at port 3 and 2 would have a phase difference of $\pi$ and 0 respectively. Thus channel selection can be realized.

The circuit can operate as a de-interleaver filter, providing the separation of odd channels at one output of the splitter and even channels at a second output of the splitter.

By changing the phase relationship between the signals in the two arms of the circuit, being fed to the splitter, and by changing the reflectivities of the end faces of the etalon, for example to have 60% and 1% reflectivities, the interleaving function disappears and the circuit operates to provide a linearized output. Such a linearized output signal is useful in such applications as wavelength locking, where a linear ramped signal is desired. Furthermore, if the two output signals are subtracted from one another, the effect is further enhanced since no loss of the signal will be induced.

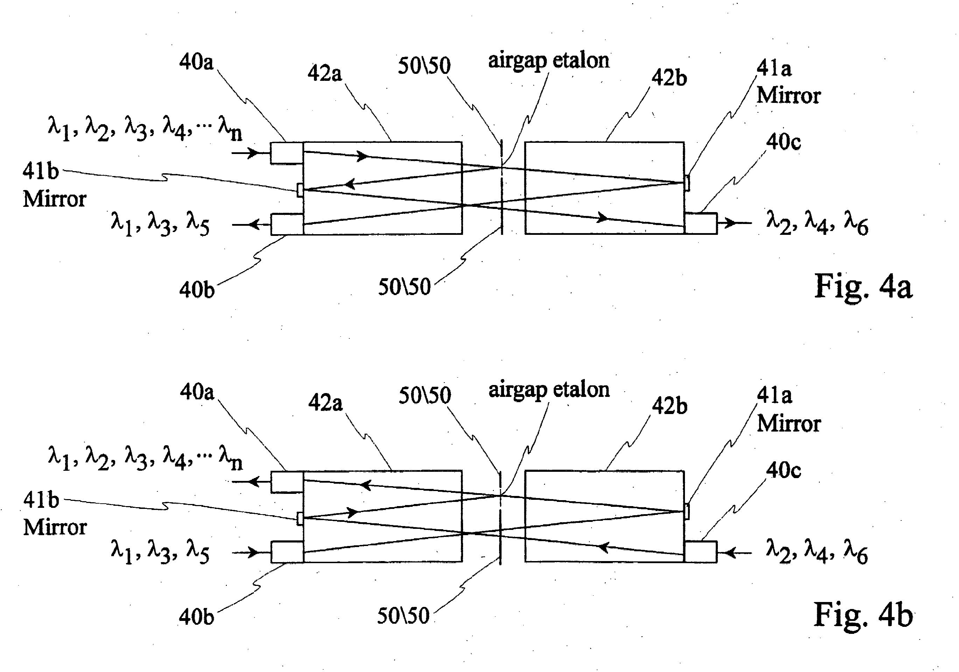

Turning now to Figs, 4a through 4c, an optical device is shown in accordance with the invention embodying a free-space device wherein unguided collimated light propagates within the device. The interleaver/de-interleaver shown has two glass interferometric end plates 42 having a spacer disposed therebetween. The spacer region between the two interferometric end plates 42 has a 50/50 coating (shown) except for where a dotted line is shown. This dotted line represents the region between the plates 42 where the etalon is formed (not shown in detail) of two at least partially reflecting surfaces having an air gap there between having a predetermined dimension of $>5\lambda$ defining the free spectral range of the etalon. Graded index (GRIN) lenses 40a, through 40c in Figs. 4a and 4b serve to provide collimated light through and between the end plates 42, and serve as focusing lenses at output ports. Mirrors 41a and 41b, are disposed at ends of the plates 42 to direct the beam toward a particular port.

For example, light launched into an input port at lens 40a is directed at the etalon between the plates. About 50% of the light is transmitted through the front end of the etalon and follows a path wherein the light is incident upon the mirror 41a and it is subsequently directed to the lens 41b; the remaining light is transmitted through the back side of the etalon and impinges upon the mirror 41b where it is subsequently directed to the port at lens 40c. As shown, when channels having centre wavelengths $\lambda 1, \lambda 2, \lambda 3, \lambda 4, .....\lambda n$ are launched into the port at lens 40a, the channels are de-interleaved at the ports at lenses 40b and 40c into channel groups $\lambda 1, \lambda 3, \lambda 5$ and $\lambda 2, \lambda 4, \lambda 6...$ respectively; thereby providing two de-interleaved groups.

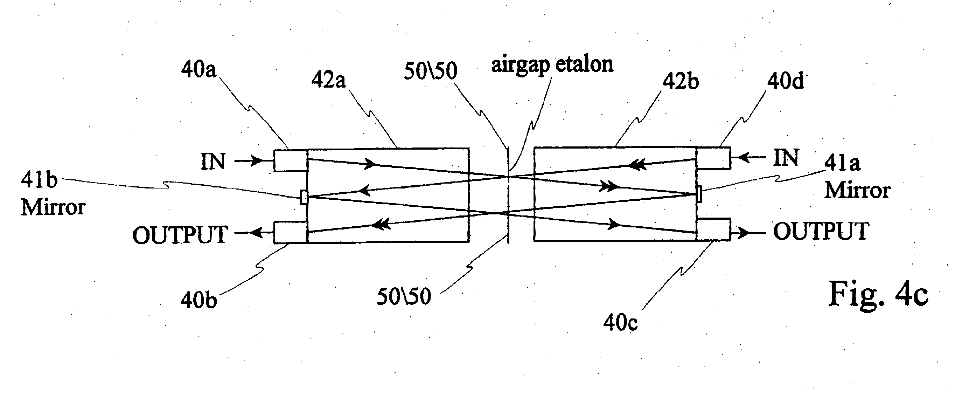

Fig. 4b illustrates how the same circuit of Fig. 4a can be used backwards to interleave de-interleaved channels. Furthermore, Fig. 4c illustrates that an extra input port at GRIN lens 40d can be added and the circuit can be used to switch input channels to either output port by appropriately adjusting and controlling the phase.

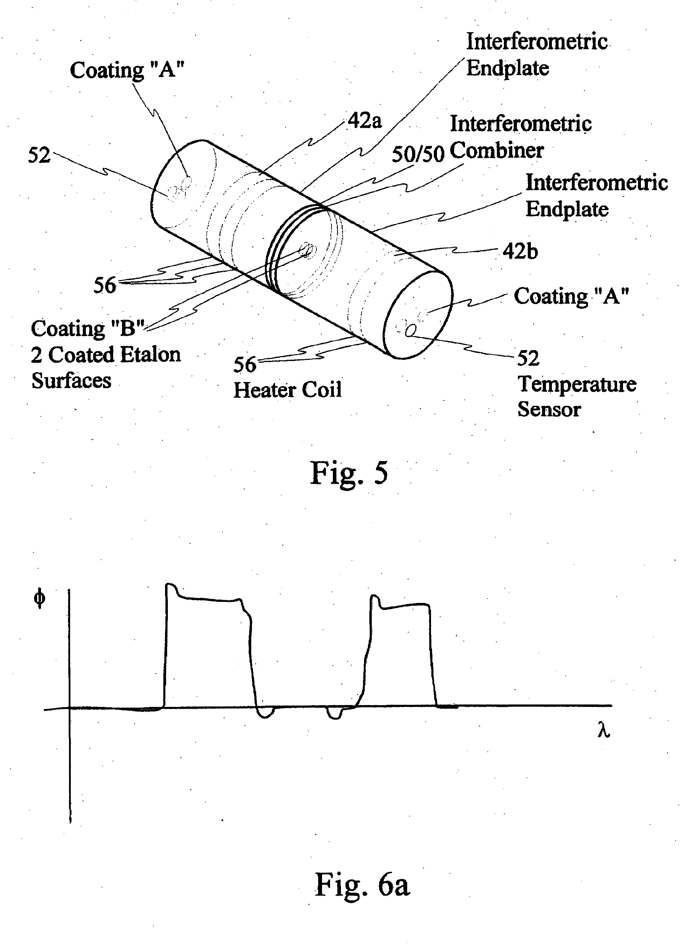

Referring now to Fig. 5, an optical device is shown embodying a free-space device wherein unguided collimated light propagates within the device. The interleaver/deinterleaver shown has two glass interferometric end plates 42 having a spacer disposed therebetween. The end plates and the spacer are joined by optical contacting. These contacting surfaces are polished simultaneously and in the same orientation in order to keep their surfaces parallel within 10 arc seconds when assembled. The axis of the through hole of the interferometric combiner and the axis of the coating B on each of the interferometric endplates are concentric within 0.1 mm. The interferometric combiner is conveniently embodied by a 50/50 coating. The etalon is absent this coating. The collimating/focusing GRIN lenses shown in Fig. 4 are not shown in Fig. 5, for clarity. Temperature sensors 52 are shown at ends of the plates 52 to determine the relative temperature difference between the two interferometric end plates 42. Heaters 42a and 42b which are conveniently wrapped around the end plates 42 are used with the temperature sensors 52 to control the phase relationship between the transmitted and reflected optical signals passing through opposite ends of the etalon.

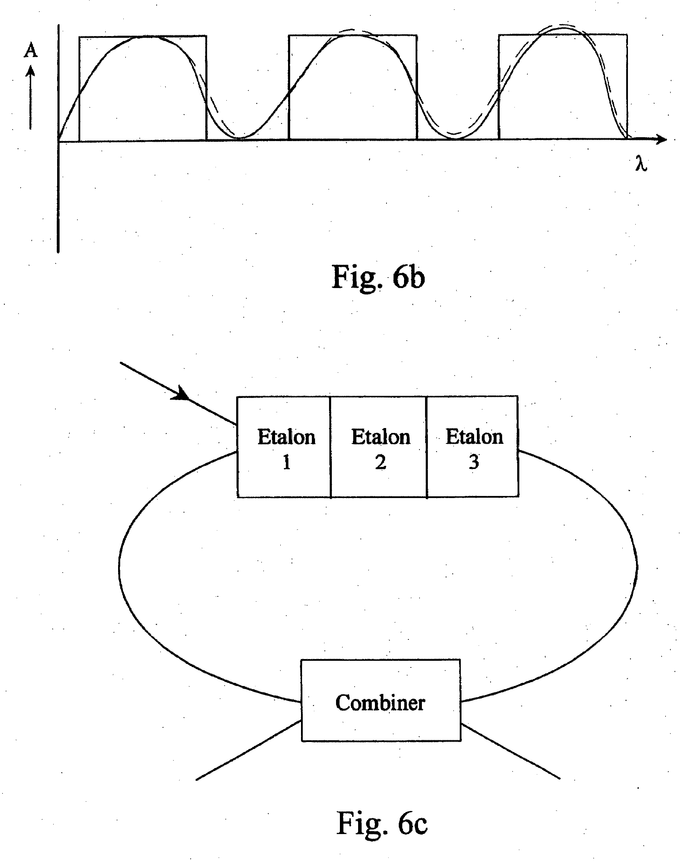

In another embodiment an odd-integer number multi-cavity etalon is used in a same manner as was the single etalon described heretofore. Thus light is captured and combined from outermost opposite ports of the multi-cavity etalon structure. By using multi-cavities, i.e. three etalons, the profile shown in Fig. 6a is acquired wherein there is an increase in the phase at certain portions 62 of the graph which result in a steeper sharper output response. Furthermore, by providing more etalon surfaces, i.e. at least four reflective surfaces in the instance of a three cavity etalon, more control is afforded by being able to change the reflectivites of each surface. Fig. 6b illustrates two plots, one in dotted outline, which represents a portion of an output spectrum for a single cavity etalon and a solid line which represents the same portion of the output spectrum for a three cavity etalon device, in accordance with the invention. Fig. 6c illustrates the circuit in accordance with this invention having a multi-cavity etalon coupled to a combiner.

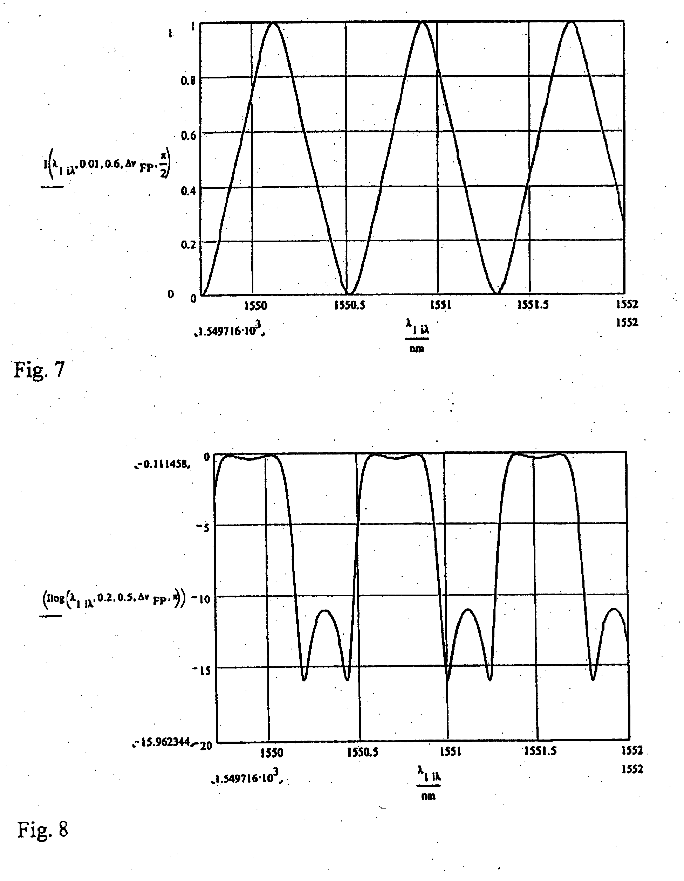

In previous embodiments the phase shifter has ensured an effective phase difference of $\pi/2$, so that the phase shift incurred through the 50/50 splitter has been compensated. This, then, has allowed complete constructive and destructive interference to occur in the interferometer outputs. However, if a different phase difference is used, then with a certain combination of reflectivities for the two facets of the etalon, a linearized intensity variation with wavelength as shown in the graph of Fig. 7 can be achieved. In this example, the reflection coefficients are 0.01 and 0.6 and the phase difference is 0.

Fig. 8 illustrates an alternative embodiment whereby a flat filter pass band is provided by using the correct phase difference and reflectivities.

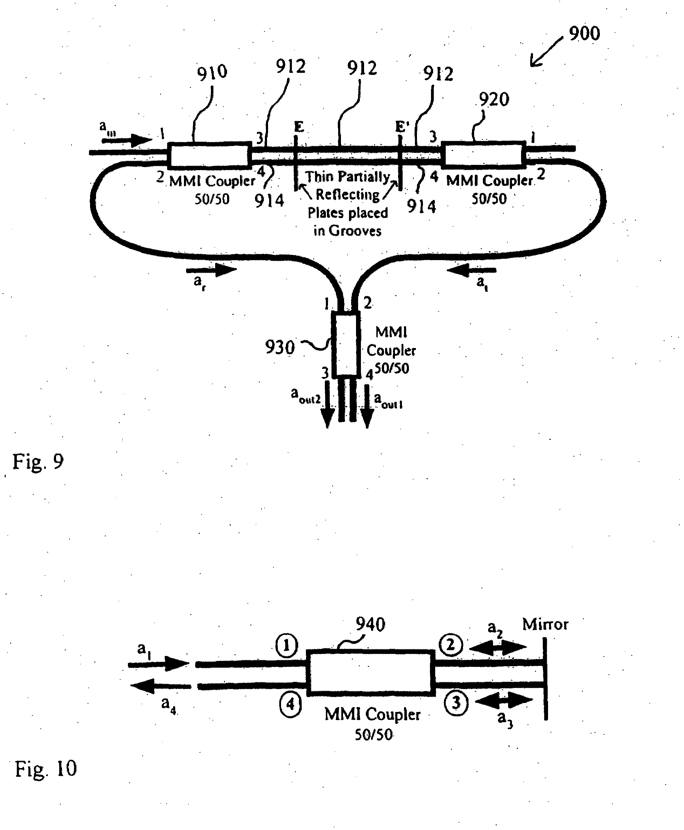

Turning now to Fig. 9, an alternative embodiment is provided which is functionally similar to the embodiment shown in Fig. 2. An interleaver circuit 900 is shown that can be conveniently made using planar waveguide technology. Here the waveguides can, for example, be disposed in glass. The waveguide regions can be doped, ion implanted, or grafted. For example the core light guide regions can be a light transmissive polymer. A first MMI 50/50 coupler 910 having an input port 1 and an output port 2 at a first end is optically coupled to a second, same MMI 50/50 coupler 920 by way of waveguides 912 and 914 disposed therebetween. Two thin partially reflecting plates E and E' are disposed in grooves cut into the waveguides 912 and 914. Plate E, waveguide 912 disposed therebetween, and plate E' form a first Fabry-Perôt etalon. Similarly, plate E, waveguide 914 disposed therebetween, and plate E' form a second Fabry-Perôt etalon. An output port 2 of the first MMI coupler 910 and an output port 2 of the second MMI coupler 920 are coupled to input ports 1 and 2 of a third MMI 50/50 coupler 930 having output ports 3 and 4 for carrying signals $a_{out1}$ and $a_{out2}$ respectively.

Prior to describing the operation of the interleaver/deinterleaver circuit 900, Fig. 10 is used as a means of describing the functionality of a four-port 3 dB coupler, similar to the ones shown in Fig. 9. An input signal $a_1$ provided to port 1 of the coupler 940 is divided equally between ports 2 and 3. After the signals are reflected backwards by the mirror, shown, they are combined into port 4 of the coupler not port 1. In this manner, the reflected signal is separated from the input signal without the requirement of an optical circulator. Of course the MMI couplers shown in Fig. 9 could be replaced with 3 dB couplers.

The operation of the circuit of Fig. 9 is similar to the operation of the de-interleaver/interleaver shown in Fig. 2. In Fig. 9 an input signal $a_{in}$ is launched into port 1 and is divided equally into two de-interleaved signals on waveguides 912 and 914 at ports 3 and 4 respectively of the coupler 910. The transmission signal $a_t$ and reflection signal $a_r$ transmitted through and reflected from the etalon between the couplers 910 and 920 are input into port 1 and 2 of the MMI coupler 930 and are provided as two de-interleaved output signals. Of course, each de-interleaved output stream can be provided to yet another similar de-interleaving circuit for further de-interleaving the channelized signals. For example, at a first stage such as the one described in reference to Fig. 9, channels 1, 3, 5, 7, ... are output on $a_{out1}$ and channels 2, 4, 6, 8, ... are output on $a_{out1}$. Notwithstanding, channels 1, 3, 5, 7, 9, can be fed to a similar circuit to circuit 900 wherein the etalon has a greater FSR so that two other data streams 1, 5, 9 and, 3, 7, 11 can further be demultiplexed.

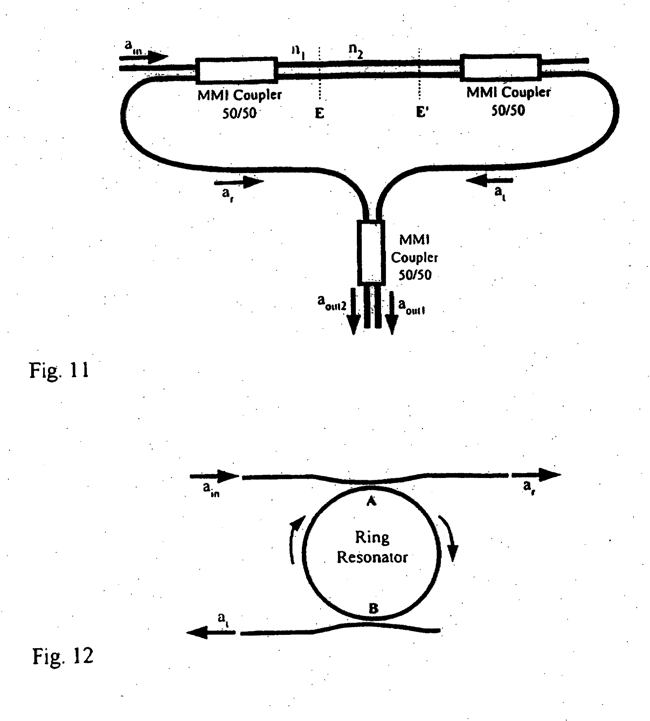

Another similar embodiment to that of Fig. 9 is shown in Fig. 11 wherein an etalon 111 is formed between the two MMI couplers 910 and 920 by way of providing a region in each waveguide 912 and 914 wherein the refractive index is different from the refractive index of the waveguides coupled to and adjacent to this region. The etalon region can be a polymer having a suitable refractive index. Of course the length of the etalon, and refractive index difference between the etalon region and adjacent regions must be sufficient such as to provide a desired reflectivity at the interface between different index regions.

Fig. 12 depicts a functionally similar embodiment to a Fabry-Perôt etalon. The circuit shown in Fig. 12 utilizes a ring resonator. An equivalent transfer function of a Fabry-Perôt resonator can be obtained by combining a waveguide ring resonator and two directional couplers as is shown. This is a 3-port device with one input port and two output ports. The signals $a_r$ and $a_t$ at the output ports of the device are equivalent to the reflected and transmitted signals of a Fabry-Perôt resonator. The coupling coefficients of the directional couplers control the finesse of the cavity. The periodic spectral response is determined by the total length of the ring through the following equation:

$$FSR = c/\Delta L$$

where c is the speed of light and $\Delta L$ is the optical length through the ring.

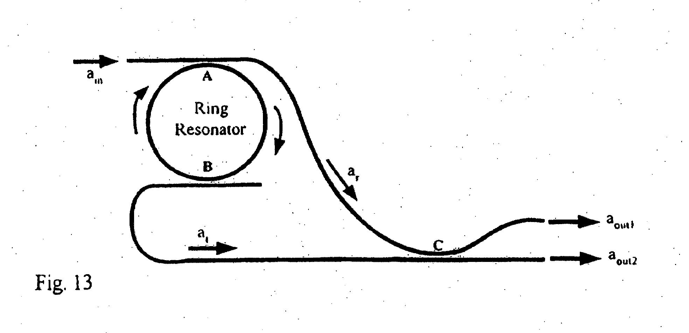

An embodiment in accordance with this invention is shown in Fig. 13. The two outputs of the ring resonator are routed to a 3 dB coupler to obtain two interleaved signals, $a_{out1}$ and $a_{out2}$.. An interleaving function can be realized if the optical length AC is equal to the optical length BC, wherein the optical length is the physical length x the refractive index. Of course the physical length is somewhat restricted by the amount of bending that can be tolerated. In a preferred embodiment, for interleaving, the coupler is a 50/50 coupler. The coupler at C can be a directional coupler or an MMI coupler. It is preferred that the couplers at A and B are 17.1% / 82: 9% couplers, such that 82.9% of the light is coupled into the ring, and 17.1% of the light passes through the waveguides adjacent the ring.

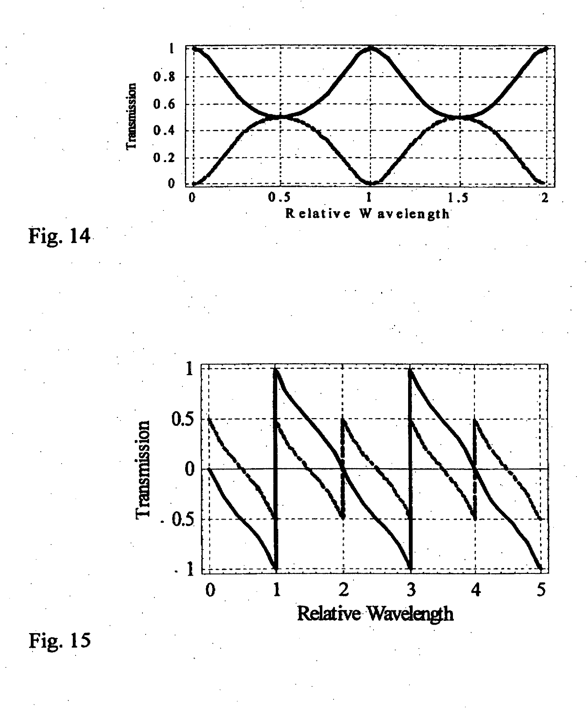

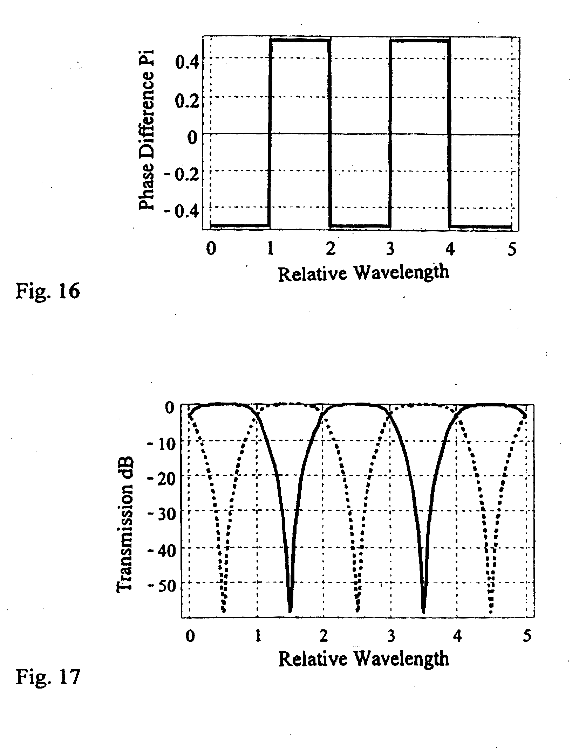

Figs. 14 and 15 show the spectral amplitude and the phase responses of the two outputs, $a_r$ and $a_t$, of the ring resonator. Figure 16 shows the phase difference between the two outputs, $a_r$ and $a_t$, of the ring resonator. The phase difference alternates between $-\pi/2$ and $+\pi/2$ over consecutive wavelength channels equivalent to the FSR of the ring resonator. Finally, Figure 17 shows the spectral transmissions of the two de-interleaved signals, $a_{out1}$ and $a_{out2}$, at the outputs of the waveguide coupler interferometer.

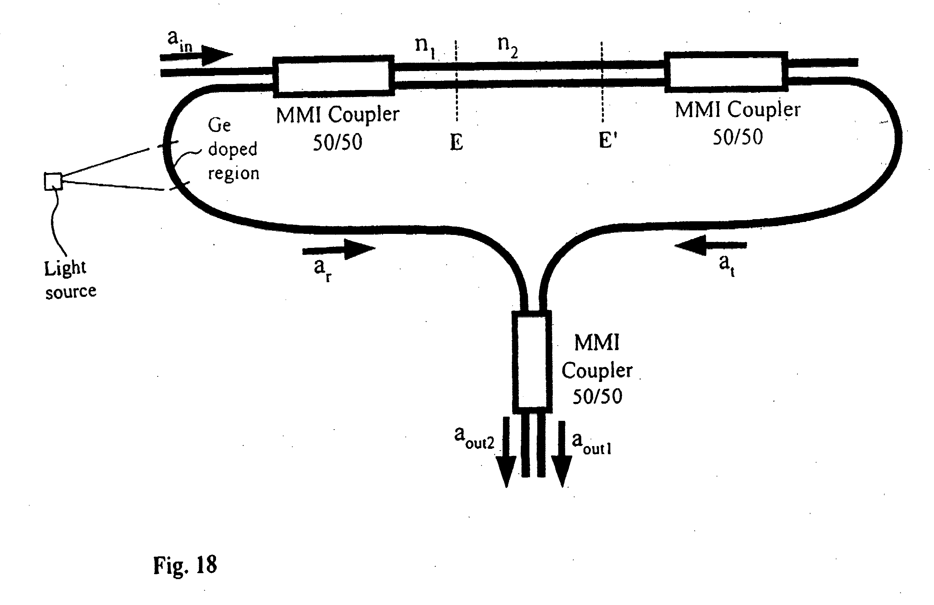

The monolithic waveguide devices described in accordance with this invention, more particularly the embodiments shown in Figs. 9, 11, and 13 can be fabricated in such a way as to make them relatively temperature stable by permanently tuning the device. In any of these embodiments one of the arms, $a_r$ or $a_t$ can be doped, for example with germanium and subsequently exposed to UV light, in order to vary the refractive index of a particular section of the doped arm. Alternatively, exposing one arm to light of a suitable intensity and duration can in some instances yield a required refractive index change to permanently tune the device. This is a convenient method shown in Fig. 18 of permanently adjusting the phase relationship between the two arms $a_r$

and $a_t$ thereby yielding very temperature tolerant devices.

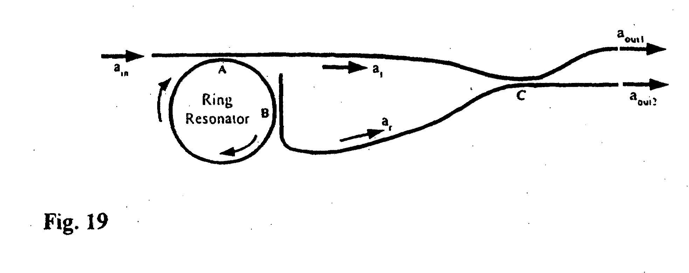

An alternative embodiment is shown in Fig. 19 wherein a de-interleaver/interleaver is shown. In this instance the locations A and B are shown to be 90 degrees apart. The relationship between the locations A, B, and C are as follows:

$$AB + BC - AC = L_{ring}/2,$$

where $L_{ring}$ is the length of the ring resonator.

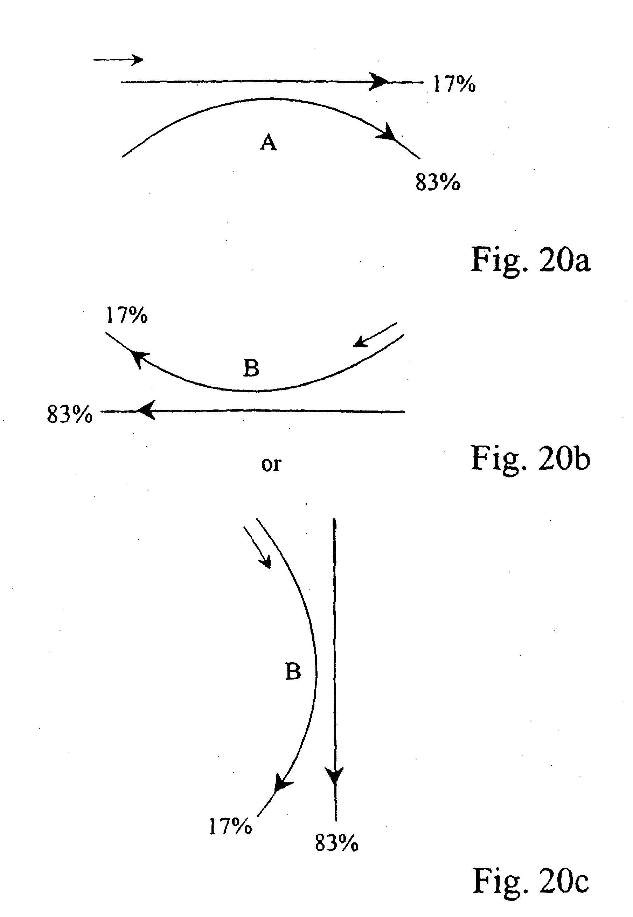

Figs. 20a, 20b, and 20c illustrate approximate power coupling ratios in couplers A, B, and C.

The detailed description provided heretofore provides an explanation of various embodiments of interleaver circuits which can de-interleave a stream of input channels into two de-interleaved streams, or conversely, which can interleave two input streams of channels into a single multiplexed interleaved stream.

However, in order to repeatedly de-interleave a stream of channels, one can utilize subsequent downstream de-interleaver circuits having a larger inter-channel spacing.

For example, if an input stream of evenly (50 Ghz) spaced channels 1, 2, 3, 4, 5, 6, 7, 8 is to be de-interleaved into four streams, one can first de-interleave the first and second groups as follows: group 1 - channels 1, 3, 5, 7, and group 2 - channels 2, 4, 6 8. Group 1 and group 2 can then individually be fed into de-interleavers having a larger (200 Ghz) spacing, to yield: group 1a consisting of channels 1 and 5, and group 1b consisting of channels 3 and 7; simultaneously in another de-interleaver, group 2 can be divided into group 2a: consisting of channels 2 and 6 and group 2b consisting of channels 4 and 8.

It is evident that interleaver/de-interleaver circuits to de-interleave group 1(2) must have a substantially different FSR than to de-interleave group 1a (2a). More specifically, the first interleaver must have an FSR of 100 Ghz and the second interleaver must have an FSR of 200 GHz, and if a third (and fourth) stage is required, the interleaver would be require to have an FSR of approximately 400 and 800 Ghz respectively. When manufacturing high-tolerance precision components, it is generally preferred to have one device that will provide multiple functions rather than to set up a production line or many production lines to manufacture several components.

Providing different devices to perform different functions is not preferred when a single device will suffice. Aside from the greater cost in manufacturing several components, each requiring separate fixturing, is believed that less error will occur if a single component will suffice.

This invention provides a solution where a single periodic filter can be used to obviate the use of filters having 100 GHz, 200 GHz and 400 GHz channel spacing.

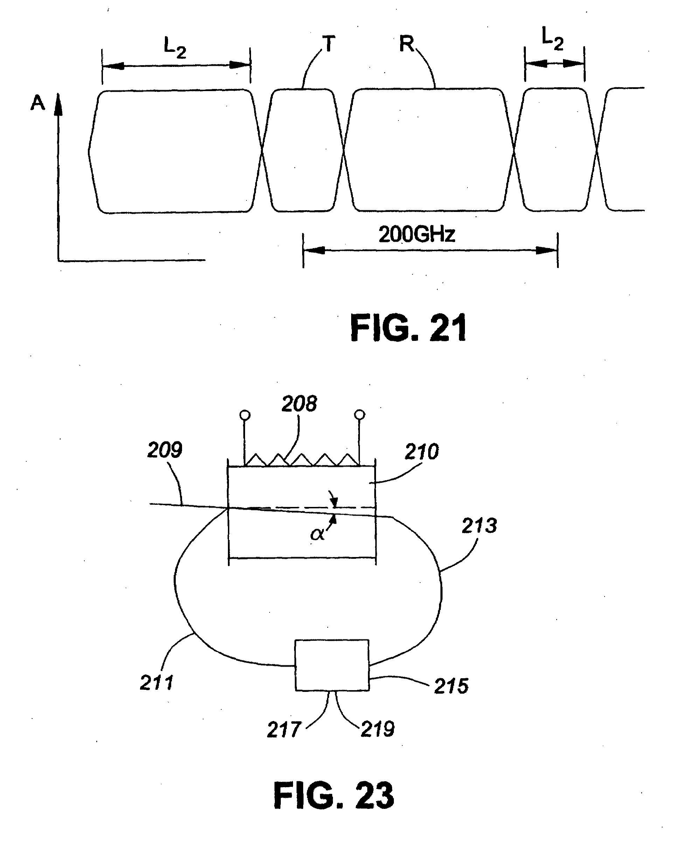

Turning now to Fig. 21, an amplitude-wavelength (A/λ) graph of the transmission/ reflection spectrum from an etalon in accordance with this invention is shown. The transmission spectrum is indicated with T, and the reflection spectrum with R. The etalon is designed such that the reflection band (width) $L_2$ is triple the transmission pass band $L_1$; the centre wavelengths can be tuned with a very small change in FSR resulting.

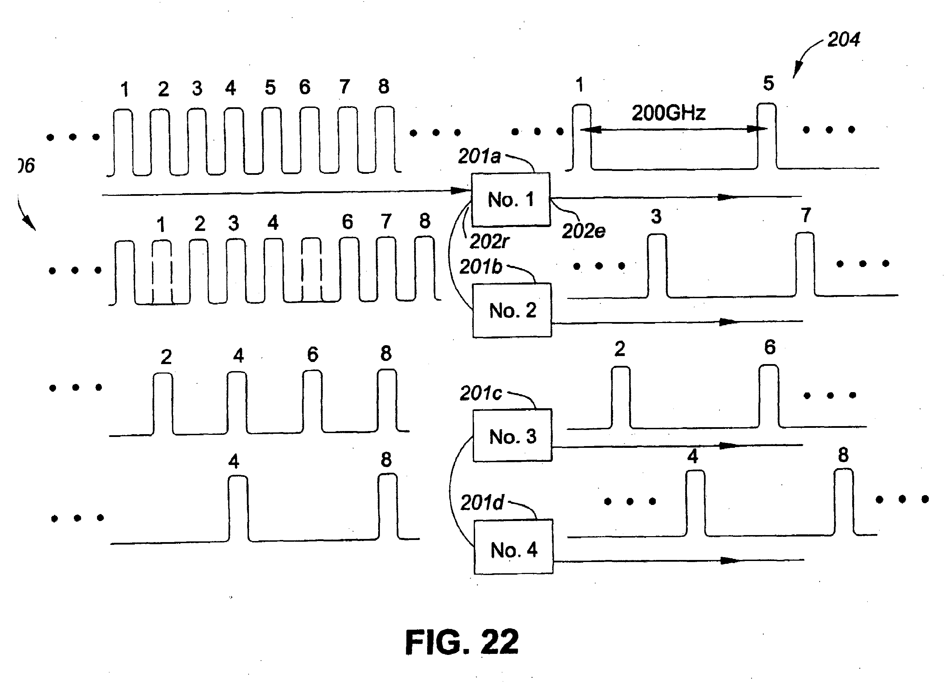

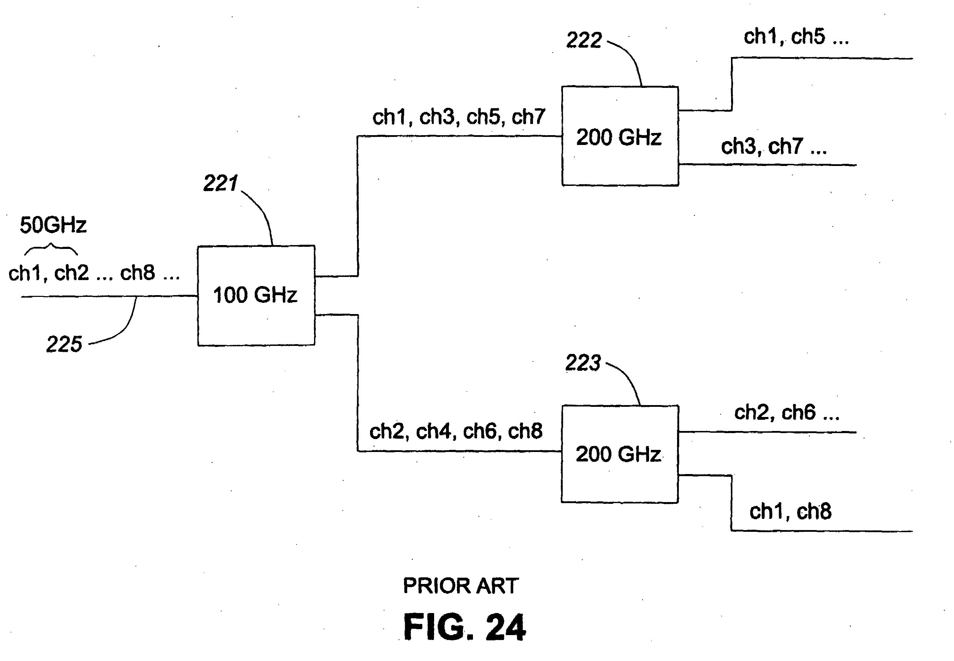

Referring now to Fig. 22, a de-interleaving/interleaving system is shown, wherein four interleavers/de-interleavers 201a, 201b, 201c and 201d are provided having etalons of substantially the same FSR. Preferably, the four interleavers are identical and any required tuning to vary the relative responses of the etalons is provided by active tuning. This form of active tuning can be in the form of temperature tuning as shown in Fig. 23 with the provision of a heater 208 on the etalon 210, or by varying the angle α of the input signal a small amount to change the optical path length traversed by the incoming signal. Of course other means of varying the optical path length can be envisaged. For example, all of the etalons can be tunable having piezoelectric transducers (not illustrated) for slightly varying the gap within the cavity. Hence, the output response of etalon 201c is shifted from the output response of interleaver 201a to provide a shift of 50 GHz; the output response of interleaver 201b is shifted form the output response of interleaver 201a by 100 Ghz; and, the output response of interleaver 201d is shifted by 150 Ghz from the output response of interleaver 201a. Thus, de-interleaving of eight channels into four streams of two channels can be achieved by using four interleavers with etalons having substantially the same FSR.

In operation, eight 50 GHz spaced input channels ch1, ch2, ch3, ch4, ch5, ch6, ch7, ch8 as shown in Fig. 22 are fed into a first 200 GHz periodic de-interleaver/interleaver 201a having reflective and transmissive output ports $202_t$ and $202_r$. The two output streams from the de-interleaver, the reflected stream and the transmitted stream, are divided such that the transmitted stream 204 (ch1, ch5...) is passed for further processing if necessary, while the reflected stream 206 is passed to the second interleaver 201b for further de-interleaving. The second de-interleaver 201b, with its spectral response being shifted by 100 Ghz relative to the first de-interleaver 210a, produces a transmitted stream with channels ch3 and ch7. By the same token, the third interleaver produces a transmitted stream with channels ch2 and ch6 and a reflected stream with channels ch4 and ch8. It will be noted that if the 200 Ghz spacing thus produced in the output streams is sufficient, the fourth interleaver is not necessary. It can however be used to "clean up" a stream produced by the other filters, if desired.

It will be understood that the factor of four (200 GHz compared to 50 GHz) applied in the example is not mandatory. The principle applies if the factor is three, five or greater. It appears however that the deinterleaving of every fourth channel provides a conveniently and sufficiently large channel spacing in the output signal for further processing.

Fig. 23 shows how the temperature of the etalons or the angles of their input signals can be varied to provide a small shift in the output response of the etalons. Fig. 23 illustrates a Fabry- Perôt etalon based interleaver having an etalon 210 with a heating element 208 for tuning purposes. The input signal 209 is shown passing through the etalon 210 at an angle α. The reflected beam 211 and the transmitted beam 213 are combined at a mixing region 215 to produce two "arms" or groups 217, 219 of de-interleaved signals.

The above description assumes that the inter-channel frequency spacings of the optical signal are all 50 GHz. In this case, the interleaver circuit is a so-called symmetrical circuit. If the channel spacings are different (but not random), the circuit can easily be adapted. For instance, if the channel spacing between channels 1 and 2, 2 and 3, 3 and 4, 5 and 6, 6 and 7... is 50 GHz, and the channel spacing between channels 4 and 5, 8 and 9... is 60 GHz, then the interleavers according to the invention would be designed for 210 GHz (3x50 + 60). It can be seen that the circuit of the invention can be adapted to various signals with irregularly spaced channels.

For comparison, Fig. 24 shows schematically a prior art circuit for processing an input signal 225 with eight channels ch1...ch8 of 50 GHz spacing therebetween. Three interleavers 221, 222 and 223 are coupled in an arrangement in which the first interleaver 221 is a 100 GHz periodic interleaver but the two next interleavers 222,223 are 200 GHz interleavers/de-interleavers. It is obvious that if another interleaving step is desired, the next four interleavers would be necessary, each being a 400 GHz interleaver/de-interleaver. The drawback of a plurality of different de-interleavers being necessary in the prior art circuit is eliminated by the present invention wherein all the interleavers/de-interleavers are substantially identical.

It is conceivable to use interleavers based on other types of resonating cavities than etalons. The interleaving function may be provided for example by a ring resonator.

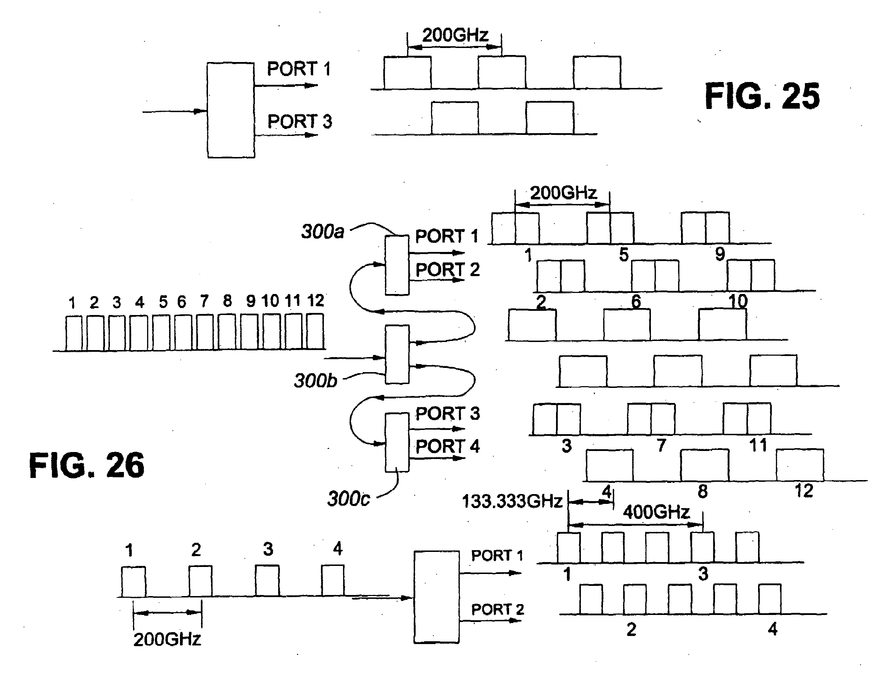

Turning now to Fig. 25, an alternative embodiment is shown wherein a symmetric interleaver/de-interleaver has an input port and two output ports. In this instance the pass band bandwidth is equal to the stop band bandwidth.

In accordance with an alternative embodiment of this invention shown in Fig. 26, three such interleavers 300a, 300b, and 300c are coupled together such that interleaver 300b has its output ports coupled to input ports of interleavers 300a and 300c. Each of the interleavers are formed of substantially identical etalons that inherently have a substantially same FSR but are angle tuned to provide a periodic output response having a centre wavelength that is shifted by 50 GHz. It should be understood, that the shift is conveniently selected to be 50 GHz however could be a different arbitrary value. The output response of the interleaver 300b is shown in dotted outline for each of its two output ports. This corresponds with the output response for the interleaver shown in Fig. 25. To understand the operation of the circuit, an output port of the interleaver 300b is fed to the interleaver 300c. Since the output response of interleaver 300c is shifted by 50 GHz, the input signal present at port 3 is filtered in such a manner as to pass only half of it to be output.

Similarly, only the other half of the signal input into the input port of interleaver 300c is output on port 4. Hence the symmetric interleaving of the interleaver 300c effectively slices the input signal into two sub-signals, a first on port 3 comprising channels 3, 7, and 11, and a second on port 4 comprising 4, 8, and 12.

In the exemplary embodiment shown in Fig. 26 channels having a bandwidth of 50 GHz are shown, however this is arbitrary. The channel bandwidth could be adjusted to be smaller or larger.

One important advantage of this invention is that same etalons can be used for interleavers 300a, 300b and 300c, wherein during fabrication, angle tuning is employed to provide a required channel offset. The very small variation in FSR due to providing different optical path lengths through the etalons is negligible; notwithstanding, this variation provides a required channel offset required. Using substantially same etalons interconnected as shown provides increased reliability and greatly lessens the cost of manufacturing the device. Another advantage of this embodiment is that wide channel spacing can be provided.

In the exemplary embodiment shown in fig. 26 a stream of closely spaced 50 GHz input channels are demultiplexed into four 200 GHz spaced channel streams wherein channels 1, 5, and 9 are output on port 1; channels 2, 6, and 10 are output on port 2; channels 3, 7, and 11 are output on port 3, and channels 4, 8, and 12 are output on port 4.

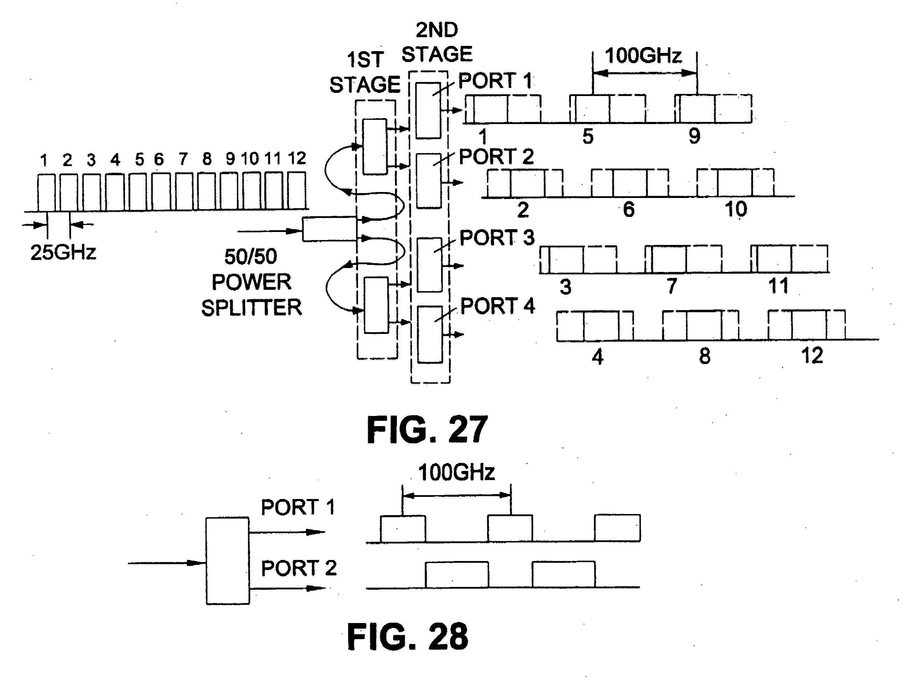

Turning now to Fig. 27, an interleaver is shown having a 50:50 wavelength independent power splitter 402 having output ports connected to input ports of de-interleavers 400a and 400b. The output ports of 400a and 400b are fed to substantially same interleavers 400c, 400d, 400e, and 400g, having shifted output responses from one another. In operation the power splitter provides two same streams having equal power output and consisting of all channels provided to its input port. By adjusting the relative centre position of the 1st stage couplers and second stage couplers, the bandwidth can be adjusted and the output can be adjusted to being symmetrical or asymmetrical. The output channel width can be adjusted to any width less than the narrowest single coupler's bandwidth. This design advantageously offers flexibility with regard to the output signal bandwidth, and the channel shape between different output ports need not be the same. By having an asymmetrical scheme a different port can be used for a signal having a different modulation rate.

Fig. 28 illustrates an asymmetric interleaver in accordance with the embodiment described in Fig. 27 wherein two 100Ghz spaced output signal streams are provided having different bandwidths.

Of course other structures such as waveplate-based interleavers can be used instead of etalons. These device can also be tuned to vary their centre wavelengths.

## Claims

1. An interleaver/de-interleaver optical circuit for interleaving or deinterleaving an input optical signal having a plurality of channels of predetermined inter-channel frequency spacing, comprising a plurality of sub- interleaver/deinterleavers, each sub- interleaver/de-interleaver being optically coupled to at least one other sub-interleaver/de-interleaver for providing an output signal thereto, or for receiving an output signal therefrom, each of the sub- interleaver/deinterleavers having a substantially same free-spectral range and a shifted spectral response relative to the other sub-interleavers/deinterleavers, each of the sub- interleaver/de-interleavers for interleaving or de-interleaving a substantially different group of periodic channels having different centre wavelengths.

2. An interleaver/de-interleaver optical circuit as defined in claim 1, wherein the plurality of sub-interleaver/de-interleavers comprise:

   a plurality of filters having a periodic output response coupled sequentially for consecutive deinterleaving of the signal to produce a plurality of de-interleaved groups of channels having increased interchannel frequency spacing compared to said input signal, said periodic filters having a
   free-spectral range that is larger than two adjacent
   inter-channel frequency spacings of said input optical signal.

3. An optical circuit as defined in claim 2, wherein the periodic filters are arranged such that each of the periodic filters is optically coupled to receive or provide a signal to another of the periodic filters, the periodic filters having a substantially symmetric output response.

4. An interleaver/de-interleaver optical circuit as defined in claim 3, wherein at least one periodic filter of the plurality of periodic filters has dual output ports or dual input ports and wherein each of said dual ports are optically coupled to provide or receive signals respectively, to or from a different sub-interleaver.

5. The circuit of claim 2 wherein said periodic filters are etalon-based interleavers/de-interleavers having etalons of substantially same or similar free spectral range.

6. The circuit of claim 5 wherein the free spectral-range of said periodic filters is at least three times the channel spacing of said input signal.

7. The circuit of claim 1 wherein each sub-interleaver/de-interleaver comprises at least one etalon.

8. The circuit of claim 1 wherein each sub-interleaver/de-interleaver comprises a plurality of etalons.

9. The circuit of claim 7 wherein each etalon has a passband and a stopband, the width of the passband being at least twice narrower than the width of the stopband.

10. The circuit of claim 7 further comprising tuning means for tuning the center wavelength of at least some of said interleavers/de-interleavers.

11. The circuit of claim 10 wherein said tuning means is a heating means

12. A method of de-interleaving a multi-channel optical signal, comprising the steps of:
passing an input signal having a plurality of channels of a predetermined spacing through a plurality of sequentially coupled periodic de-interleaving filters having each a substantially same period, and wherein peak centre passbands of the filters are offset from one another, the filters being arranged such that one of the filters is optically coupled to receive or provide a signal to another of the filters, and wherein the period of the filters is greater than two adjacent inter-channel frequency spacings of said input signal.

13. The method of claim 12, further including the step of tuning a central wavelength of a second interleaver and subsequent interleavers/de-interleavers in the sequence.

14. The method of claim 13 wherein said tuning is effected by controlling the optical path length of said at least one etalon.

15. The method of claim 13 wherein said tuning is effected by controlling the angle of incidence of an input signal.

Fig. 1

Fig. 2a

EP 1 126 293 A2

Fig. 1a

EP 1 126 293 A2

$$\text{Ilog}(\lambda_{1i\lambda}, 0.99, 0.1, \Delta v_{FP}, \frac{3 \cdot \pi}{8})$$

——————

$$\text{Refletlog}(\lambda_{1i\lambda}, 0.99, 0.1, \Delta v_{FP}, \theta) - 100$$

— — — —

-1

——————

-3

— · — · —

1 dB=0.666nm    3dB=0.8nm

$$\frac{\lambda_{1i\lambda}}{nm}$$

Fig. 1b

Fig 2

110b     Etalon     110a

θ

101

Input

103

Reflected

102

Transmitted

110

Fig. 3

Fig. 4a

41a Mirror
40c
$\lambda_2, \lambda_4, \lambda_6$
42b
airgap etalon
50\50
50\50
42a
40a
$\lambda_1, \lambda_2, \lambda_3, \lambda_4, \cdots \lambda_n$
41b Mirror
$\lambda_1, \lambda_3, \lambda_5$
40b

Fig. 4b

41a Mirror
40c
$\lambda_2, \lambda_4, \lambda_6$
42b
airgap etalon
50\50
50\50
42a
40a
$\lambda_1, \lambda_2, \lambda_3, \lambda_4, \cdots \lambda_n$
41b Mirror
$\lambda_1, \lambda_3, \lambda_5$
40b

Fig. 4c

Coating "A"

Interferometric Endplate

42a

Interferometric 50/50 Combiner

52

Interferometric Endplate

56

42b

Coating "A"

Coating "B"
2 Coated Etalon Surfaces

56

52

Heater Coil

Temperature Sensor

## Fig. 5

$\phi$

$\lambda$

## Fig. 6a

Fig. 6b

Fig. 6c

$$\frac{I\left(\lambda_{1\,i\lambda}, 0.01, 0.6, \Delta v_{FP} \cdot \frac{\pi}{2}\right)}{}$$

Fig. 7

$$\frac{\left(1\log\left(\lambda_{1\,i\lambda}, 0.2, 0.5, \Delta v_{FP} \cdot \pi\right)\right)}{}$$

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20a

or

Fig. 20b

Fig. 20c

**FIG. 21**

**FIG. 23**

**FIG. 22**

EP 1 126 293 A2

PRIOR ART
FIG. 24

FIG. 25

FIG. 26

EP 1 126 293 A2

**FIG. 27**

**FIG. 28**

EP 1 126 293 A2